# EUROPEAN PATENT SPECIFICATION

(11) **EP 3 331 197 B1**
(45) Date of publication and mention of the grant of the patent: **26.08.2020**
(21) Application number: 16201834.5
(22) Date of filing: 02.12.2016
(51) Int. Cl.: H04L 12/24, H04L 12/26, H04W 52/02

(54) **A METHOD AND SYSTEM FOR MONITORING A CONNECTION STATUS OF A DEVICE**
VERFAHREN UND SYSTEM ZUR ÜBERWACHUNG DES ZUSTANDS EINER VORRICHTUNG
PROCÉDÉ ET SYSTÈME POUR SURVEILLER UN ÉTAT DE CONNEXION D'UN DISPOSITIF

(43) Date of publication of application: 06.06.2018
(73) Proprietor: Advanced Digital Broadcast S.A., 1293 Bellevue (CH)
(72) Inventor: Fratini, Franco, 20126 Milano (IT); Storto, Marco, 20126 Milano (IT)
(74) Representative: Kancelaria Eupatent.pl Sp. z.o.o

(56) References cited:
- WO-A1-2016/014516
- CN-A- 104 052 653
- US-A1- 2015 003 284

## Description

### TECHNICAL FIELD

The present invention relates to a method and a system for monitoring a connection status of a device, in particular an loT device.

### BACKGROUND

Nowadays vast amount of user devices, in particular loT (Internet of Things) devices, such as appliances, are able to be remotely controlled by through cloud entities. This means that many messages are exchanged between the cloud and controlled devices (objects). Many of those messages may be lost due to lack of connectivity on a device side, due to for example home network not connected to the Internet, device power off, insufficient Wi-Fi signal quality.

There are several existing solutions to control the connection status. One is to send messages to a device and then wait for an acknowledgment. In case the device is not connected the acknowledgment will not come back, so after a certain number of retries it will be declared disconnected. The other solution is to send a probe message (a "ping") to the device to monitor the connection status. The real status is known up to the moment of answer received, but the information becomes obsolete immediately after. In both cases several messages are sent to the device when it is connected to verify that it still is, and when it is not connected to understand that it is not.

A US patent application US20090013064 discloses a method to support a sleep mode for an embedded device. The method comprises transmission of MQTT messages, including a LWT message, but for the purpose of buffering of messages that are directed to a sleeping device and it does not deal with monitoring the status of the device to communicate the status to another remote device.

A US patent application US2015003284 discloses state synchronization among neighboring network devices, wherein responsive at least to detecting the second network device, the first network device subscribes to a multicast group associated with the second network device. Thereafter, the first network device receives multicast data associated with the multicast group associated with the second network device.

A Chinese patent application number CN 104 052 653 discloses a method for state presentation based on MQTT. The method comprises the steps that state messages sent to a second client by a first client are received; the state messages needing to be cached are refreshed, wherein according to the refreshing process, the newest state message is restored and the earlier state messages are deleted according to the time sequence; the newest state message is stored to a caching zone; the newest state message stored in the caching zone is pushed to the second client.

The existing solutions provide a poor user experience as discovering an unconnected device require fairly long timeouts and unnecessary transmission of messages.

Therefore, there is a need to provide a solution to allow knowing the connection status of a network device that will reduce transmission of messages and the response time.

### SUMMARY

There is disclosed a method and a back-end server structure for monitoring a connection status of a device accessible via a network, according to the appended claims.

### BRIEF DESCRIPTION OF DRAWINGS

Further details and features of the present invention, its nature and various advantages will become more apparent from the following detailed description of the preferred embodiments shown in drawings, in which:
- Fig. 1: presents a structure of a system of communicating devices;
- Fig. 2: presents a flow diagram of messages exchange;
- Fig. 3: presents a flowchart of a connectivity agent operation;
- Fig. 4: presents a message related to device status;
- Fig. 5: presents a message related to connection status.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

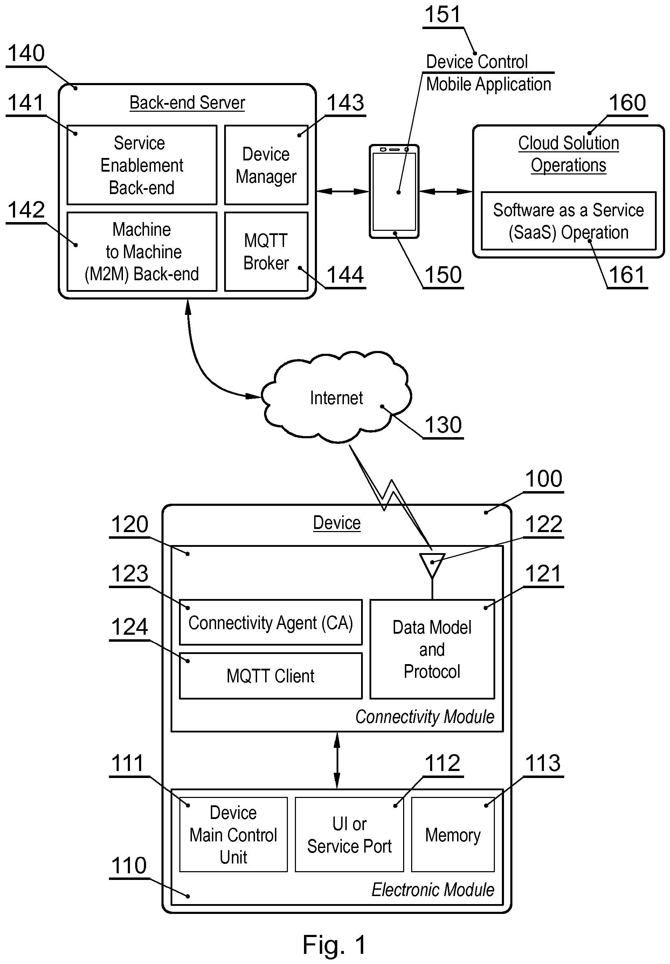

Fig. 1 presents a structure of a system of communicating devices utilizing an MQTT protocol (Message Queuing Telemetry Transport, as defined by ISO/IEC PRF 20922:2016). The MQTT protocol is often used in case when a network connection is unreliable. Therefore it is assumed that some clients will disconnect undesirably from the network, due to lost connection, unexpected power off etc. Therefore it would be desirable to know if a connected client has disconnected on purpose (with an MQTT DISCONNECT message) or accidentally. Therefore, as soon as the protocol handshake is properly finished, the client provides the broker with an undesired disconnection message to be sent from the broker to the device manager upon connection interruption. Such a message is the Last Will and Testament (LWT) which is foreseen in the MQTT features, and is employed herein to notify undesired disconnections of clients.

A device 100 represents a device (an loT device, an appliance) which is controlled by a mobile application 151 run on a controlling device 150, such as a smartphone 150 or the like.

The system comprises a cloud solution operations module 160 providing software as a service (SaaS) operation 161.

The system further comprises a back-end server 140 comprising a service enablement back-end 141 module for allowing administration of the server 140, a device manager 143 for managing control devices, a machine to machine (M2M) back-end for communicating with the devices 100 and an MQTT broker module 144 responsible for receiving messages, filtering messages and sending messages to subscribed clients. The MQTT broker 144 is also responsible for the authentication and authorization of clients.

The back-end server communicates with the devices 100 via a network, preferably via the Internet 130.

The device 100 comprises a connectivity module 120 with a data model and protocol module 121 for communicating via an antenna 122, a connectivity agent (CA) 123 for handling the connection by means of an MQTT client 124 which generally represents a device with an MQTT Library connected to an MQTT broker over any kind of network. The connectivity module 120 translates the signals from/to the internal circuits/units of the device 100 such as a device main control unit 111 a UI (User Interface) or service port 112 and memory 113.

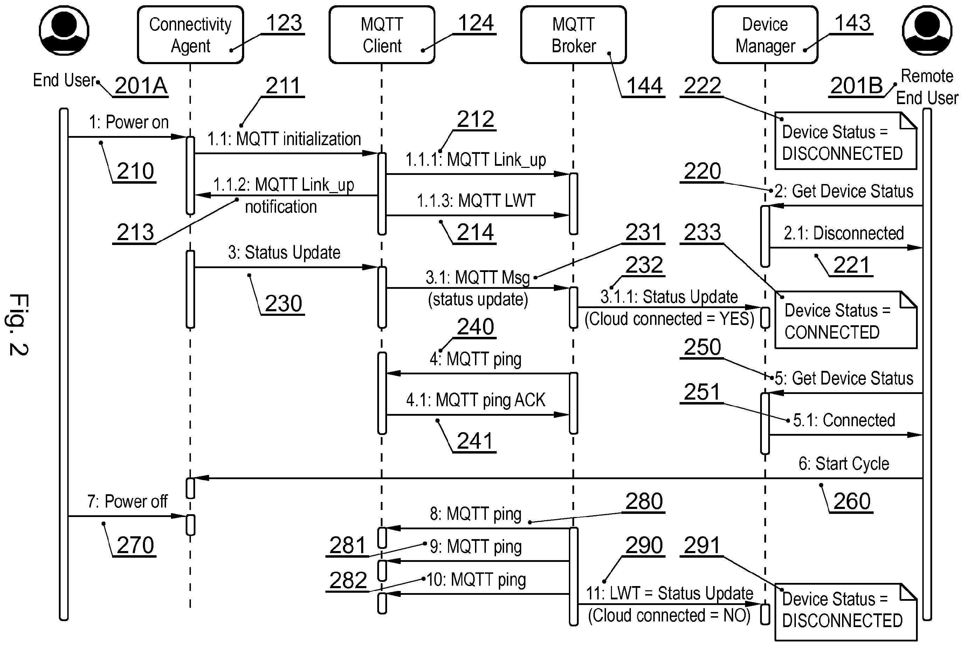

Fig. 2 presents a flow diagram of messages exchange according to the method of the invention. After a user 201A powers on the device 100 in step 210, the connectivity agent 123 is activated and sends an MQTT initialization message in step 211 to the MQTT client 124 informing of its activity. The MQTT client 124 sends an MQTT Linkup command in step 212 to the MQTT broker 144 and responds to the connectivity agent 123 with an MQTT linkup notification in step 213. Next, the MQTT client sends an MQTT LWT message in step 214 that contains the Last Will and Testament message of the client to the MQTT broker 144. The Last Will and Testament message is stored by the MQTT broker 144 and is sent to a device manager 143 in case the device 100 loses its connection to the network. Later on, the connectivity agent sends a status update message in step 230 to the MQTT client 124 which transmits it to the MQTT broker 144 as an MQTT message status update in step 231. In the meantime, a remote end user 201B may send a message to get device status in step 220 to a device manager 143 and receive a reply that the device is disconnected in step 221, until the MQTT broker 144 sends a message to the device manager 143 with a status update in step 232, meaning that the device 100 is connected. Then, when the remote end user 201B asks for a device status again in step 250, it receives a reply message in step 251 that the device is connected. The MQTT broker 144 checks if the MQTT client 124 is connected by sending ping messages in step 240. If the MQTT client is connected, the MQTT client 124 responds with a ping ACK (acknowledgment) in step 241. Knowing that the device 100 is connected, the remote end user 201B may send a start cycle command in step 260 to the device 100. If the device 100 is powered off in step 270, the MQTT broker 144, after sending several ping messages in steps 280-282 to the MQTT client 124 and not receiving any ping ACK, sends an LWT message in step 290 to the device manager 143, with an updated status that the device 100 is not connected. As a result, the remote end user 201B receives a message that the device 100 status is disconnected in step 291.

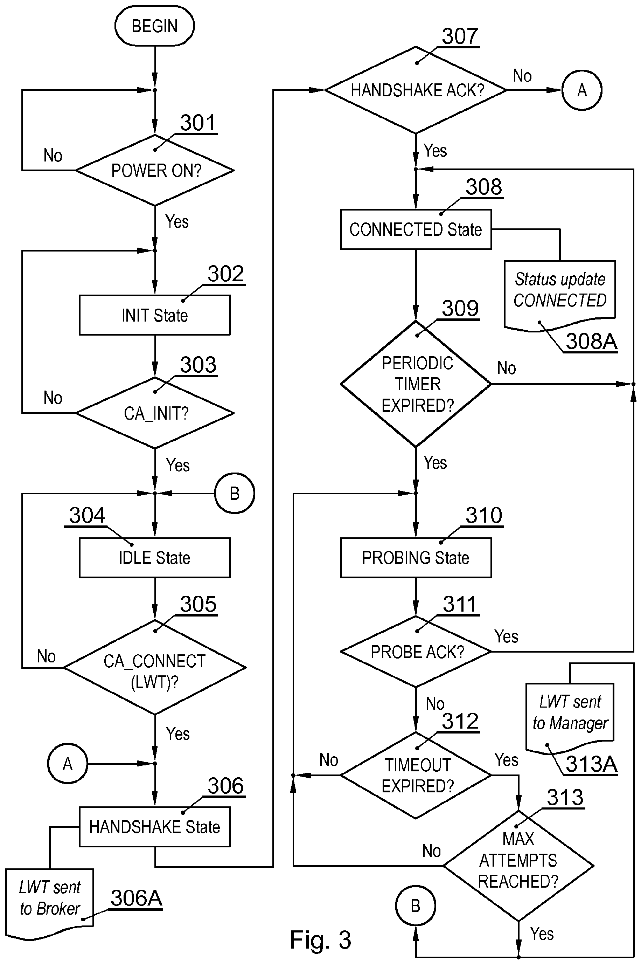

Fig. 3 presents a flowchart of operation of the connectivity agent 123. In the first step 301 it is checked if a device is powered on. If so, the connectivity agent 123 is initialized in step 302, wherein the connectivity agent initializes all internal variables and registers memory addresses of shared resources needed to activate the connection. In step 303 it is checked if the initialization of the connectivity agent 123 is complete. If so, it enters an idle state 304, otherwise the procedure returns to step 302. In step 305 the connectivity agent connection application is called. If it is not running, the procedure returns to the idle state in step 304. Otherwise, it enters a handshake state in step 306, wherein a secure handshake connection is established. In step 306A, an LWT message is sent from the MQTT client to the MQTT broker 144, so that the MQTT broker 144 receives the LWT message to store it and to send it to the cloud in future in case the connection between broker 144 and client 124 will be interrupted. It is checked in step 307 whether a handshake acknowledgment was received from the device 100. If it is not received, the procedure continues to step 306, otherwise it continues to a connected state in step 308, wherein a connectivity agent 123 manages messages in both directions. The status is updated and changes to a "connected" status in step 308A: Connectivity Agent notifies the cloud about the status change by sending "Status update" message. In step 309 it is checked whether a periodic timer expired, if not no action is taken. State doesn't change and the procedure continues to step 308. If the periodic timer is expired, then the procedure enters into a probing state 310, wherein the connectivity agent 123 waits for the probe message acknowledgement (311) coming from the counterpart in the cloud to confirm the activity of the connection. If the acknowledgment is received, the flow continues to step 308, otherwise in step 312 it is checked whether a timeout for receiving the acknowledgment has expired. If it has not expired, the procedure returns to step 310 and continues to wait for the acknowledgment. Otherwise, the procedure may check in step 313 whether a maximal predetermined number of probing attempts has been reached, and if not, resume probing in step 310. However, if the maximal number of probing attempts were unsuccessful, this indicates that the connection is interrupted, therefore the LWT message is sent from the MQTT broker 144 to the device manager 143 in step 313A and the procedure continues to step 304 to end the connection.

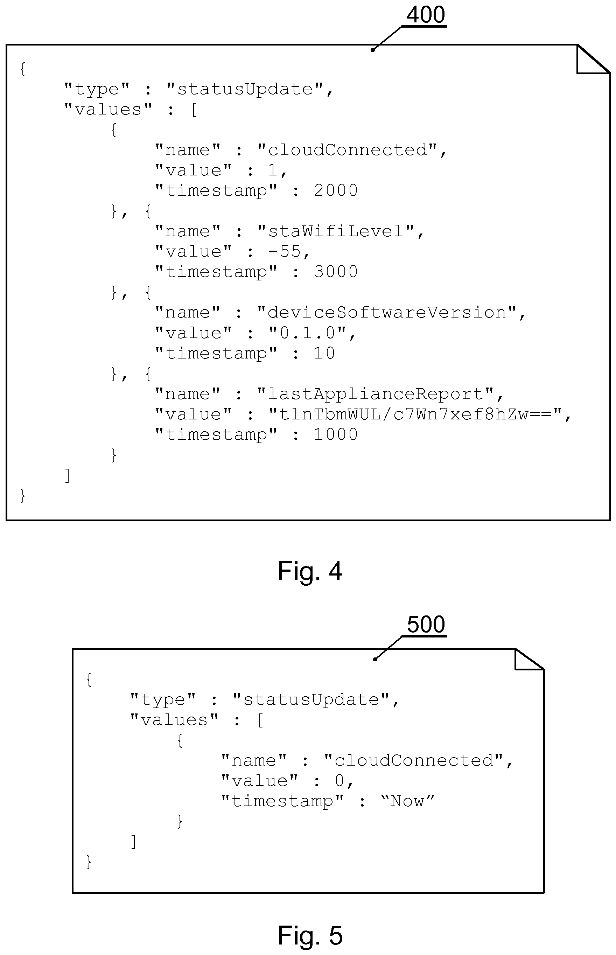

Fig. 4 presents an example of a JSON (JavaScript Object Notation) structure of a message related to a device status. The structure may comprise a status of the device, a connection status, a Wi-Fi signal level, a device software version and a last device report.

Fig. 5 presents an example of a JSON structure of a message related to a connection status. The structure represents the JSON message that transports the connection status of the device. It is the message (LWT) sent automatically by the MQTT broker 144 when the MQTT client 124 is declared as disconnected. The message is similar to that s presented in Fig. 4, but comprises only the "cloudConnected" field, as other values could not be up to date. This is possible due to the fact that according to JSON, structure fields can be optionally present into the message.

As described above, in the solution presented herein, the MQTT broker 144 is instructed to send a message to a cloud endpoint on a behalf of device endpoints each time the link between the MQTT broker and the device endpoint is interrupted, to notify that device endpoint state is "DISCONNECTED". And every time the MQTT connection is restored, the device endpoint immediately sends a message (see Fig. 3) to the cloud endpoint including (among other information) its status to notify that device endpoint state is "CONNECTED".

This allows the cloud endpoint to know the current connection status of every device at any moment without sending cyclic probe messages to device endpoints. This allows to reduce the amount of transmitted messages in case of an active connection (no need to actively monitor the connectivity status) and in case of a disconnection (no need to send messages waiting for a response to verify the restoration of the connection). As a result, the end user sees immediately the connectivity status of the device without delays due to timeout of probe messages.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for monitoring, by a device manager (143) at a back-end server (140) a connection status of a device (100) accessible via a network (130) by a broker (144) using MQTT (Message Queuing Telemetry Transport) commands, the method comprising performing at the broker (144) the steps of:
- attempting to establish (306) a handshake connection with the device (100);
- receiving (306A) from the device (100) an LWT (Last Will and Testament) message;
- upon determining (307) that the handshake connection has been established, notifying (308A) the device manager (144) about the device connection status as connected;
- periodically sending (310) to the device (100) at least one probe message; and
- if no response to the probe message is received from the device (100) (312, 313), sending (313A) the LWT message to the device manager (144) to notify the device manager (144) about the device connection status as disconnected.

2. The method according to claim 1, further comprising communicating the device status from the device manager (144) to remote devices (150).

3. A non-transitory computer readable storage medium comprising instructions that, when executed by a computer, enable monitoring a connection status of a device in accordance with the method according to any of claims 1-2.

4. A back-end server for monitoring a connection status of a device (100) accessible via a network (130), the back-end server comprising:
- a device manager (143) configured to monitor the connection status of the device (100); and
- a broker (144) configured to communicate with the device (100) using MQTT (Message Queuing Telemetry Transport) commands by:
- attempting to establish (306) a handshake connection with the device (100);
- receiving (306A) from the device (100) an LWT (Last Will and Testament) message;
- upon determining (307) that the handshake connection has been established, notifying (308A) the device manager (144) about the device connection status as connected;
- periodically sending (310) to the device (100) at least one probe message; and
- if no response to the probe message is received from the device (100) (312, 313), sending (313A) the LWT message to the device manager (144) to notify the device manager (144) about the device connection status as disconnected.

5. The back-end server according to claim 4, wherein the device manager (144) is configured to communicate the device status to remote devices (150).

## Patentansprüche

1. Verfahren zur Überwachung eines Verbindungszustands einer Vorrichtung (100), auf die über ein Netzwerk (130) durch einen Broker (144) unter Verwendung von MQTT- (Message Queuing Telemetry Transport) Befehlen durch einen Vorrichtungsmanager (143) an einem Back-End-Server (140), wobei das Verfahren die Ausführung der folgenden Schritte an dem Broker (144) umfasst:
- Versuchen, eine Handshake-Verbindung mit der Vorrichtung (100) herzustellen (306);
- Empfangen (306A) einer LWT- (Last Will and Testament) Nachricht von der Vorrichtung (100);
- nach dem Bestimmen (307), dass die Handshake-Verbindung hergestellt worden ist, Benachrichtigen (308A) des Vorrichtungsmanagers (144) über den Vorrichtungsverbindungszustand als verbunden;
- periodisches Senden (310) mindestens einer Testnachricht an die Vorrichtung (100); und
- wenn keine Antwort auf die Testnachricht von der Vorrichtung (100) empfangen wird (312, 313), Senden (313A) der LWT-Nachricht an den Vorrichtungsmanager (144), um den Vorrichtungsmanager (144) über den Vorrichtungsverbindungszustand als getrennt zu benachrichtigen.

2. Verfahren nach Anspruch 1, das ferner das Kommunizieren des Vorrichtungszustands von dem Vorrichtungsmanager (144) an entfernte Vorrichtungen (150) umfasst.

3. Nichtflüchtiges, computerlesbares Speichermedium, das Anweisungen umfasst, die, wenn sie durch einen Computer ausgeführt werden, die Überwachung eines Verbindungszustands einer Vorrichtung gemäß dem Verfahren nach einem der Ansprüche 1 bis 2 ermöglichen.

4. Back-End-Server zur Überwachung eines Verbindungszustands einer Vorrichtung (100), auf die über ein Netzwerk (130) zugegriffen werden kann, wobei der Back-End-Server folgendes umfasst:
- einen Vorrichtungsmanager (143), der zur Überwachung des Verbindungszustands der Vorrichtung (100) gestaltet ist; und
- einen Broker (144), der zur Kommunikation mit der Vorrichtung (100) unter Verwendung von MQTT- (Message Queuing Telemetry Transport) Befehlen gestaltet ist, durch:
- Versuchen, eine Handshake-Verbindung mit der Vorrichtung (100) herzustellen (306);
- Empfangen (306A) einer LWT- (Last Will and Testament) Nachricht von der Vorrichtung (100);
- nach dem Bestimmen (307), dass die Handshake-Verbindung hergestellt worden ist, Benachrichtigen (308A) des Vorrichtungsmanagers (144) über den Vorrichtungsverbindungszustand als verbunden;
- periodisches Senden (310) mindestens einer Testnachricht an die Vorrichtung (100); und
- wenn keine Antwort auf die Testnachricht von der Vorrichtung (100) empfangen wird (312, 313), Senden (313A) der LWT-Nachricht an den Vorrichtungsmanager (144), um den Vorrichtungsmanager (144) über den Vorrichtungsverbindungszustand als getrennt zu benachrichtigen.

5. Back-End-Server nach Anspruch 4, wobei der Vorrichtungsmanager (144) zur Kommunikation des Vorrichtungszustands an entfernte Vorrichtungen (150) gestaltet ist.

## Revendications

1. Procédé pour surveiller, par un gestionnaire de dispositif (143) au niveau d'un serveur de back-end (140), un état de connexion d'un dispositif (100) accessible par l'intermédiaire d'un réseau (130) par un courtier (144) utilisant des commandes MQTT (Message Queuing Telemetry Transport), le procédé comprenant l'exécution au niveau du courtier (144) des étapes consistant à :
- tenter d'établir (306) une connexion par poignée de main avec le dispositif (100) ;
- recevoir (306A) du dispositif (100) un message LWT (Last Will and Testament) ;
- après avoir déterminé (307) que la connexion par poignée de main a été établie, informer (308A) le gestionnaire de dispositif (144) de l'état de connexion de dispositif comme étant connecté ;
- envoyer périodiquement (310) au dispositif (100) au moins un message de sonde ; et
- si aucune réponse au message de sonde n'est reçue du dispositif (100) (312, 313), envoyer (313A) le message LWT au gestionnaire de dispositif (144) pour informer le gestionnaire de dispositif (144) de l'état de connexion de dispositif comme étant déconnecté.

2. Procédé selon la revendication 1, comprenant en outre l'étape consistant à communiquer l'état de dispositif du gestionnaire de dispositif (144) aux dispositifs à distance (150).

3. Support de stockage non transitoire lisible par ordinateur comprenant des instructions qui, lorsqu'elles sont exécutées par un ordinateur, permettent de surveiller un état de connexion d'un dispositif conformément au procédé selon l'une quelconque des revendications 1 à 2.

4. Serveur de back-end pour surveiller un état de connexion d'un dispositif (100) accessible par l'intermédiaire d'un réseau (130), le serveur de back-end comprenant :
- un gestionnaire de dispositif (143) conçu pour surveiller l'état de connexion du dispositif (100) ; et
- un courtier (144) conçu pour communiquer avec le dispositif (100) en utilisant des commandes MQTT (Message Queuing Telemetry Transport) en :
- tentant d'établir (306) une connexion par poignée de main avec le dispositif (100) ;
- recevant (306A) du dispositif (100) un message LWT (Last Will and Testament) ;
- après avoir déterminé (307) que la connexion par poignée de main a été établie, informant (308A) le gestionnaire de dispositif (144) de l'état de connexion de dispositif comme étant connecté ;
- envoyant périodiquement (310) au dispositif (100) au moins un message de sonde ; et
- si aucune réponse au message de sonde n'est reçue du dispositif (100) (312, 313), envoyant (313A) le message LWT au gestionnaire de dispositif (144) pour informer le gestionnaire de dispositif (144) de l'état de connexion de dispositif comme étant déconnecté.

5. Serveur de back-end selon la revendication 4, le gestionnaire de dispositif (144) étant conçu pour communiquer l'état de dispositif à aux dispositifs à distance (150).
